# EUROPEAN PATENT APPLICATION

(11) **EP 4 491 454 A1**
(43) Date of publication of application: **15.01.2025**
(21) Application number: 24187824.8
(22) Date of filing: 10.07.2024
(51) Int. Cl.: B60P 1/43, B60P 3/12

(54) **TRANSPORT VEHICLE COMPRISING AN OPTIMIZED MOBILE PLATFORM**

(30) Priority: 11.07.2023 IT 202300014520
(71) Applicant: Omars S.p.A., 12100 Cuneo (IT)
(72) Inventor: Andreis, Renato, 12100 CUNEO (IT); Martinotti, Stefano, 12100 CUNEO (IT)
(74) Representative: Mola, Edoardo

(57) **Abstract**

Transport vehicle, preferably a tow truck, comprising a chassis, a cockpit, and a platform on which at least one vehicle or motorcycle can be loaded, with the cockpit and the platform being connected to the chassis and arranged so that the platform extends longitudinally over the chassis from the cockpit to an end of the chassis longitudinally opposite to the cockpit, and the platform is configured to be both longitudinally movable for translation relative to the chassis, so that it can extend at least partially cantilevered out from the chassis, and rotatable about an axis transverse to the direction of travel of the transport vehicle so that it can be inclined towards the road surface; and
the platform further comprises an extendable portion actuated from the longitudinally opposite end of the platform relative to the cockpit, and a ramp hinged to the extendable portion.

## Description

### TECHNICAL FIELD

The present invention relates to the field of transport vehicles designed to carry motor vehicles or motorcycles on board, in particular a transport vehicle comprising an optimized mobile platform on which to load at least one motor vehicle or motorcycle. The present invention also concerns a method for controlling the stability of the transport vehicle and a method for mounting the optimized mobile platform on an existing transport vehicle.

### STATE OF THE ART

In the field of transport vehicles, particularly those for transporting vehicles such as tow trucks, commercially available solutions typically include vehicles with a driver's cockpit and a platform, usually positioned behind the driver's cockpit and fixed to the vehicle's chassis so that it extends horizontally in the direction opposite to the driver's cockpit for a length sufficient to support at least one or more vehicles loaded onto the rescue vehicle itself, e.g., a car that has broken down or has been in an accident and cannot continue driving.

Additionally, to load a vehicle onto a tow truck, for example, currently available platforms are generally designed to be movable for translation and rotation to extend longitudinally in a cantilever fashion and rotate to approach the road surface until at least a portion of the platform contacts it. This allows the vehicle to be rescued to be driven onto the rescue vehicle's platform with its own wheels.

Furthermore, to load a car that cannot generate traction with its own wheels onto such transport vehicles, such as a wrecked vehicle, there are widely used solutions that include devices with ropes or retractable chains on board, e.g., a winch, to attach one end of these ropes or chains to the vehicle to be rescued and tow it by retracting the rope or chain through the winch's operation.

Additionally, to load a car onto the transport vehicle using the winch without its wheels slipping or sliding downward while the winch is in operation, commercially available solutions often include a pivoting arm usually hinged to the platform where the vehicle to be rescued is loaded, with the arm having a fork fixed to its free end and configured to perform, among various functions, the task of diverting the path of the winch's rope or chain so that it extends vertically toward the ground. This way, when the rope or chain is in use, a vertical component of the towing force is generated, counteracting the car's slippage or sliding downward.

However, to achieve this result, currently available solutions have many disadvantages, such as the complex design of the pivoting arm, the need for sufficient space on the platform to allow the arm's mobility, causing an imbalance on the platform that reduces the transport vehicle's load capacity, and being costly solutions that require frequent maintenance.

### OBJECT AND SUMMARY OF THE INVENTION

The present invention aims to satisfy at least in part the aforementioned needs, with this aim being achieved by means of a transport vehicle, preferably a tow truck, as per claim 1.

According to a preferred embodiment of the present invention, a transport vehicle is presented designed to carry motor vehicles or motorcycles on board, e.g., a tow truck, which features an optimized mobile platform configuration on which to load at least one motor vehicle or motorcycle. In particular, through this solution, it is possible to create a transport vehicle comprising a platform that is simpler in terms of design and construction, benefiting the overall costs of the vehicle and requiring less maintenance compared to conventional transport vehicles. Moreover, this solution provides greater stability against overturning and higher load capacity for the transport vehicle during the operation of loading a vehicle to be rescued on board, while simultaneously increasing safety conditions for users working around such a transport vehicle while it is in operation.

In particular, to achieve this result, the transport vehicle comprises a chassis, a cockpit, and a platform on which at least one vehicle or motorcycle can be loaded, these components are connected to the chassis and arranged so that the platform extends longitudinally above the chassis from the cockpit towards an end of the chassis that is longitudinally opposite to the cockpit. Additionally, the platform is configured to be longitudinally mobile for translation relative to the chassis so that it can be partially extended in a cantilever fashion out of the chassis, e.g., by means of motorized guides, and also mobile for rotation around an axis transverse to the direction of advancement of the transport vehicle so that it can be inclined towards the road surface, e.g., by means of a hinge mechanism.

Therefore, since the platform is elevated from the ground, it can be extended in a cantilever manner and inclined to contact the road surface and load, e.g., a car without needing to lift it. Additionally, according to one aspect of the present invention, the platform includes an extendable portion from the longitudinally opposite end of said platform relative to the cockpit.

Preferably, the extendable portion is arranged within a longitudinal housing of the platform, and when actuated, e.g., by motorized carriages or hydraulic actuators, the extendable portion extends out of the housing, increasing the longitudinal extension of the platform. In this way, the extendable portion can be used to reduce the angle between the road surface and the platform when the platform is inclined towards the road surface, i.e., the angle of inclination of the platform towards the road surface is reduced without contacting it, and then contacts it through the actuation of the extendable portion. In this way, it is possible to load vehicles with low ground clearance, such as sports cars and/or cars with very advanced front ends, without using platforms with rotationally mobile parts.

Furthermore, the transport vehicle includes a ramp hinged to the extendable portion and movable between a lowered position, in which the respective surfaces of the ramp and the platform on which a vehicle to be loaded advances define a first angle, and a raised position, in which said respective surfaces define a second angle smaller than the first angle. In particular, by using a locking device, such as tie rods connected to the ramp and the platform, the extendable portion can be used to move the ramp from a lowered position to a raised position. Advantageously, it is also possible to use the extendable portion in combination with the ramp when a vehicle to be rescued has locked wheels that cannot advance onto the platform. In particular, by actuating the extendable portion, it is possible to push the ramp under the wheels of the vehicle to position the vehicle at least partially on the tow truck without having to tow it yet. According to a further preferred embodiment, the tow truck may be without the extendable portion, with the ramp hinged to the platform. In this case, for example, the rotation of the ramp from a lowered position to a raised position can be executed, for example, by providing hydraulic actuators connected to the platform and the ramp. Additionally, the transport vehicle includes a support device, preferably a fork comprising seats to accommodate the tires of a vehicle, hinged to the chassis under the platform that extends longitudinally in a cantilever fashion from said chassis, this support device is movable between an upper end-of-travel position under the platform and a working position where it is extended downwards with an end portion in contact with the road surface.

According to another aspect of the present invention, the ramp has a through opening preferably positioned above the platform when the ramp is rotated to a raised position. This opening is used when it is necessary to tow a vehicle, e.g., a vehicle that is in a ditch or otherwise unable to resume driving. In particular, having generally on board such transport vehicles a motorized winding device, such as a winch with a rope or chain that can be used to tow, e.g., a broken-down vehicle, it is possible to keep the ramp in a raised position and extend the rope or chain from the winch towards the opening so that, when the rope or chain passes through the opening, its path is diverted towards the vehicle to be towed, which is located opposite the winch relative to the ramp. To reduce friction, a pulley or rollers can be mounted in the opening so that the rope or chain rests on them while being wound. In this way, when the rope or chain is wound to pull the vehicle, the contribution of the vertical component of the towing force is greater than it would be if the rope or chain were wound by the winch resting along the platform. Therefore, having the towing force with a vertical component that increases with the ramp's verticality, it is possible to generate a force acting on the wheels of the vehicle to be rescued, increasing their grip on the ground, and thus reducing the risk of slipping or sliding down while the vehicle is being towed. Advantageously, the support device, e.g., the fork, is kept rotated in contact with the ground while the ramp and winch are in operation. In this way, the support device in contact with the road surface exerts a resisting force opposite to that exerted by the vehicle being towed, which causes a torque that makes the tow truck more unstable, therefore through this solution, the tow truck is more stable, minimizing the presence of cantilever elements to divert the path of the rope or chain for towing the vehicle to be rescued.

### DESCRIPTION OF THE DRAWINGS

The constructional and functional characteristics of the transport vehicle can be better understood from the detailed description that follows, referring to the attached figures that represent a preferred and non-limiting embodiment, in which:
- Fig. 1 shows a view of the transport vehicle according to a preferred embodiment of the present invention with the platform extended and inclined towards the road surface;
- Fig. 2 shows a detailed view of a variant of the preferred embodiment of Fig. 1;
- Fig. 3 shows a view of the transport vehicle according to the embodiment of Fig. 1 with the ramp rigidly fixed in an upwardly rotated position;
- Fig. 4 shows a detailed view of the ramp of Fig. 3;
- Fig. 5 shows a view of the transport vehicle with the ramp in a position parallel to the platform and the corresponding decomposition of the resisting force acting on the rope or chain into vertical and horizontal components;
- Fig. 6 shows views of the transport vehicle with the ramp in various upwardly rotated configurations and the corresponding decomposition of the resisting force acting on the rope or chain into vertical and horizontal components;

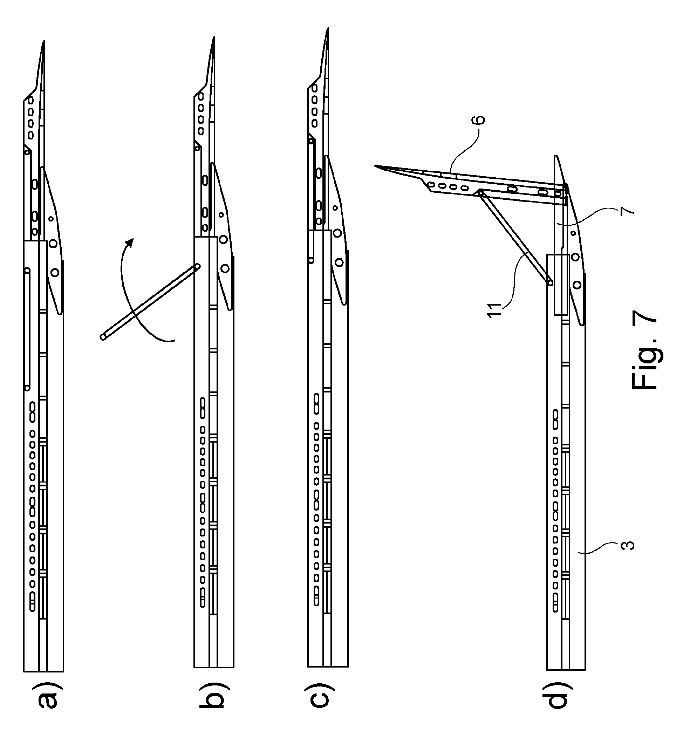

- Fig. 7a-7d show schematic views of the steps for hinging the ramp to the platform according to a preferred embodiment of the present invention.

### DETAILED DESCRIPTION OF THE INVENTION

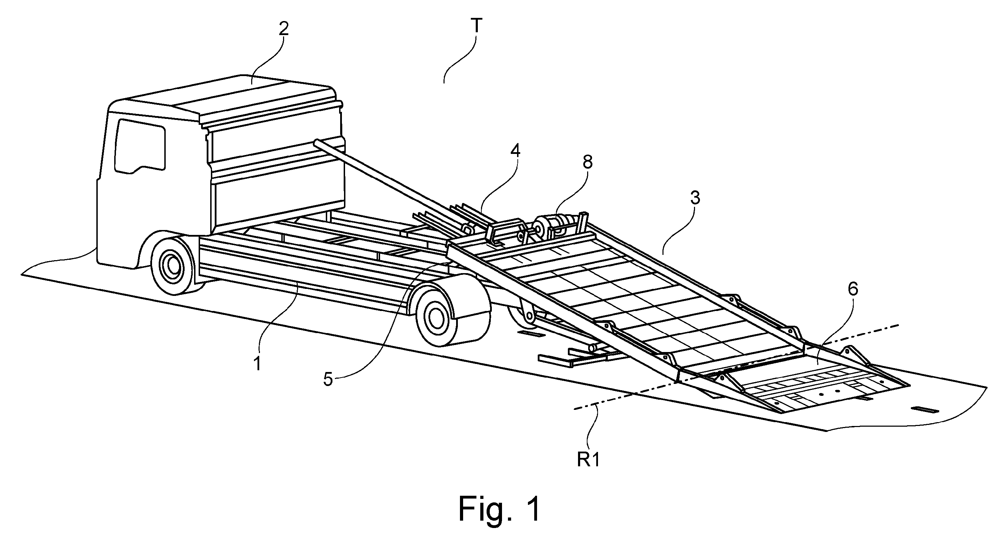

According to a preferred embodiment of the present invention, Fig. 1 shows a transport vehicle T configured to carry motor vehicles or motorcycles on board, such as a tow truck. In particular, this transport vehicle T, which in the following description will be referred to as a 'tow truck', comprises a chassis 1 to which the wheels are connected, a cockpit 2 mounted on the chassis in a forward position towards the direction of advancement of the tow truck, and a platform 3 connected to the chassis that extends longitudinally above the chassis from the cockpit 2 towards the opposite end of the chassis relative to the cockpit. Specifically, the platform 3 is connected to the chassis 1 so as to extend horizontally for a length sufficient to receive and carry at least one vehicle that is loaded onto the tow truck, e.g., a broken-down or damaged car that cannot resume driving. In particular, since the platform 3 is arranged in an elevated position to the road surface, to load a vehicle onto the tow truck, the platform 3 is connected to the chassis 1 so as to be movable for translation and rotation, thus being able to approach and contact the road surface to allow the vehicle to advance onto the platform without needing to lift it. To achieve this result, the tow truck T comprises motorized guides 4 to which the platform 3 is movably connected for translation. For example, the guides 4 may comprise motorized carriages movable within these guides and to which the platform is rigidly fixed. In this way, it is possible to use the motorized guides 4 to longitudinally extend the platform 3 out of the chassis 1 so that a portion of the platform is positioned in a cantilevered manner. Additionally, to bring the platform 3 closer to the road surface from a configuration where it is at least partially cantilevered, the tow truck comprises a hinge mechanism 5 connected to the chassis 1 and the platform 3 so that, when actuated, the platform can rotate around an axis transverse to the direction of advancement of the tow truck. Preferably, this transverse axis can be fixed or movable. For example, the hinge mechanism 5 can be a motorized arm having a first end connected to the chassis and a second end longitudinally opposite the first, to which the platform 3 is connected. In this way, by using the hinge mechanism 5, the platform 3 can be tilted from a horizontal position towards the road surface until it makes contact with it. As can be understood, according to this constructional configuration, the greater the portion of the platform that is cantilevered out of the chassis 1, the smaller the angle defined between the road surface and the plane of the tilted platform. However, to reduce the longitudinal space when the platform is extended cantilevered out of the chassis, and thus be able to operate in confined spaces, the platform 3 comprises an end portion opposite the cockpit 2 defining a ramp 6 that is rotatable relative to the remaining portion of the platform, i.e., movable relative to the portion of the platform towards the cockpit. For example, the ramp 6 can be rigidly fixed to a shaft (not shown in the figure) inserted into a transverse hole made on the remaining portion of the platform so that the shaft can rotate around a first axis R1 of the hole, causing the ramp 6 to rotate relative to the remaining portion of the platform. In this way, it is further possible to facilitate the loading of vehicles onto the platform when operating space is limited, while simultaneously being able to achieve an angle between the road surface and the loading plane of the ramp 6 that is substantially zero to load vehicles with low ground clearance such as sports cars and/or vehicles with a very advanced front end.

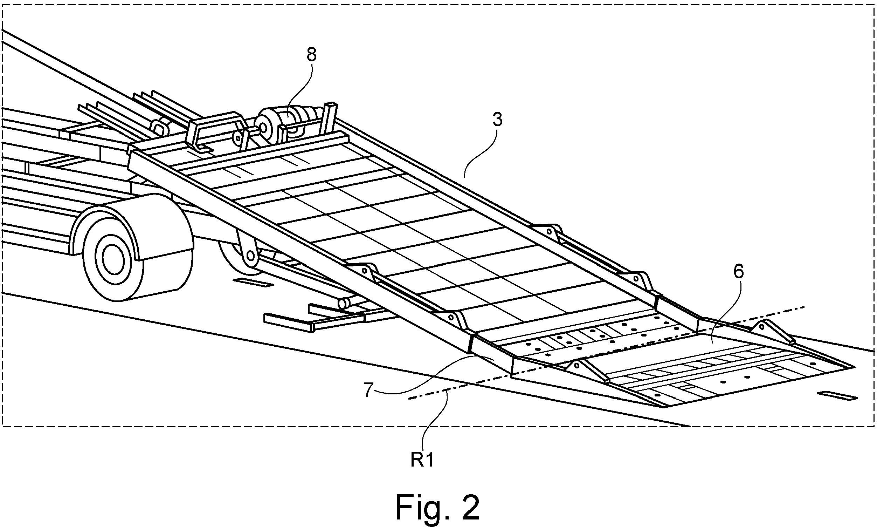

According to a first preferred embodiment of the present invention, as shown in a detailed view in Fig. 2, the platform 3 comprises a longitudinally extendable portion 7 in the direction opposite the cockpit 2 and configured to increase the overall length of the platform when extended. Preferably, the extendable portion 7 is housed within a longitudinal compartment of the platform and, when actuated, e.g., by motorized carriages or hydraulic actuators, the extendable portion extends out of the housing, increasing the longitudinal extension of the platform. According to one aspect of the present invention, the ramp 6 is rotationally movable around the first axis R1 between a lowered position where the respective surfaces of the ramp and the platform 3 on which a vehicle to be loaded advances define a first angle A1, and a raised position where said respective surfaces define a second angle A2 smaller than the first angle A1. In particular, to achieve this result, the tow truck comprises a releasable locking device 11, comprising, for example, tie rods each having, when the locking device is engaged, a first end hinged to the platform 3 defining a second axis R2 spaced and parallel to the first axis R1 and a second end, longitudinally opposite the first, hinged to the ramp 6 to bring it to a raised position. In particular, when the second ends of the tie rods are not engaged with the ramp 6 or the platform 3, the actuation of the extendable portion causes a longitudinal movement of the ramp along with the extendable portion, keeping the ramp in a lowered position to load, for example, a vehicle onto the tow truck. When it is desired to bring the ramp to a raised position, the second ends of the tie rods 11 are connected to the ramp and the platform, e.g., manually hinged to the platform by an operator of the tow truck. Preferably, other solutions may be provided in which the engagement of the second ends on the ramp 6 can be performed automatically, e.g., by implementing a mechanism, such as a pneumatic system, to engage and disengage a pin with the respective tie rod. In this way, i.e., when the ends of the tie rods 11 are hinged to the platform 3 and the ramp 6, it is possible to create a linkage configuration through which, by extending the extendable portion 7, the ramp rotates around the second axis R2 into a raised position. According to a further aspect of the present invention, by extending the extendable portion 7, the platform can reach the road surface with the same inclination, thus further reducing the longitudinal space needed for the tow truck to operate, i.e., the cantilevered portion of platform 3 is reduced compared to a configuration without an extendable portion. Additionally, the extendable portion can also be used to reduce the platform's inclination when it is necessary to load a vehicle onto it, specifically reaching the road surface by extending the extendable portion. In this way, both the ramp 6 and the extendable portion 7 can be used in combination to load a vehicle with locked wheels onto the ramp, which cannot advance onto the platform, such as, for example, an electric vehicle with a locked front end, e.g., due to the presence of one or more electric motors on the front axle that prevent its movement. In particular, the extendable portion 7 can be actuated so that the ramp 6, in a configuration where the locking device 11 is disengaged, rotates relative to the extendable portion into a position substantially parallel to the road surface once it contacts it. From this position, the extendable portion 7 can be further extended so that the ramp 6 is pushed under the wheels of the vehicle to be rescued, allowing part of the vehicle to be loaded, thus facilitating the loading operations onto the platform.

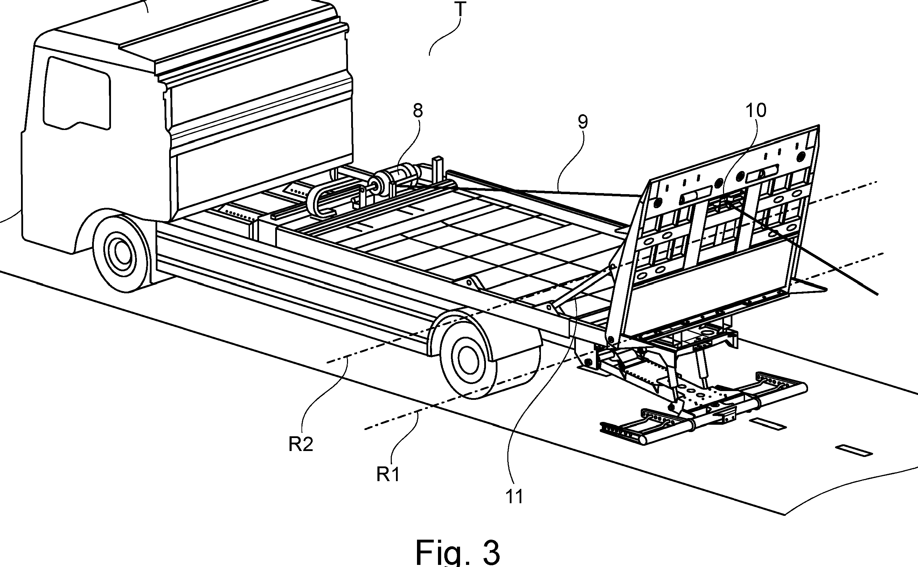

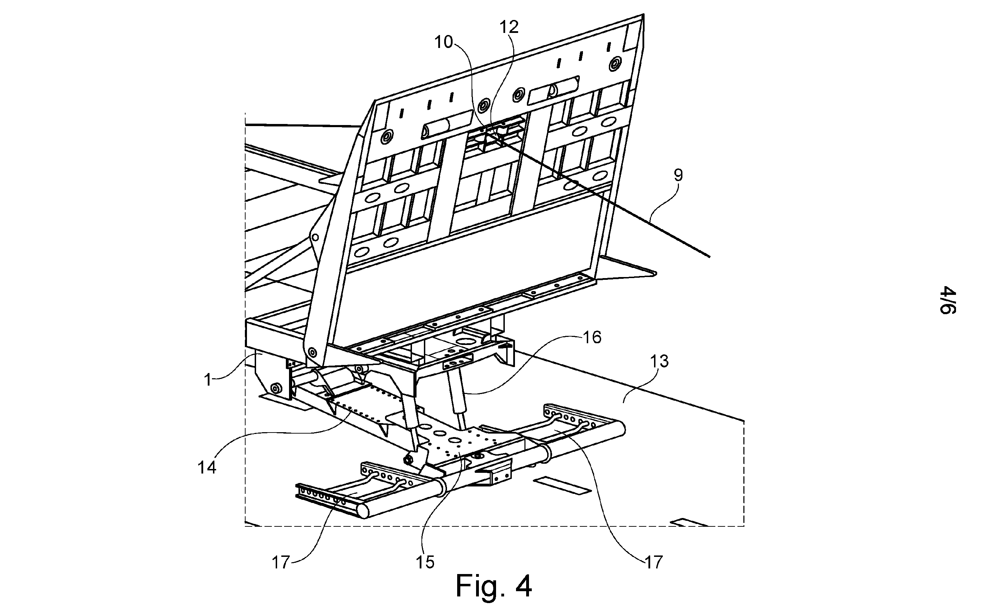

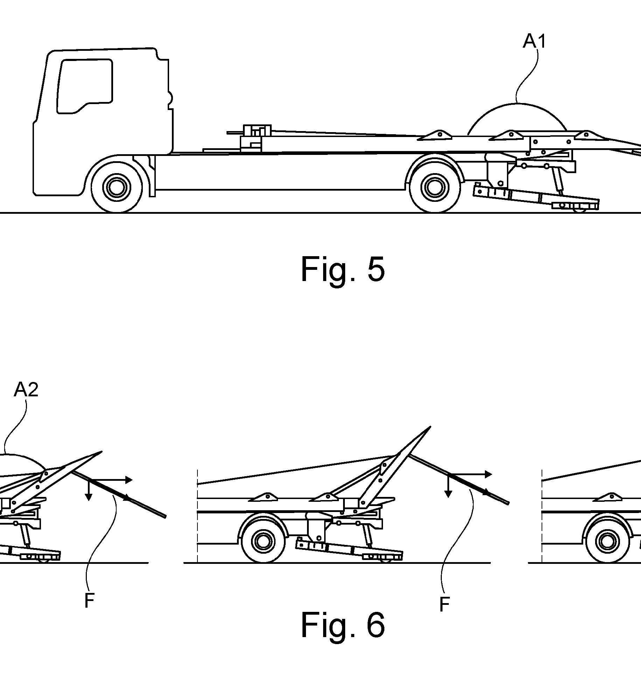

According to a further preferred embodiment of the present invention, the tow truck features a construction configuration without the extendable portion 7, with the ramp 6 hinged to the platform 3. For example, the ramp 6 can be connected to the platform 3 in a rotationally movable manner by means of a transversely positioned shaft. In this configuration, unable to use the extendable portion to raise the ramp 6, the tow truck can include actuators, e.g., hydraulic, having one end connected to the platform and an opposite longitudinal end connected to the ramp. In this way, for example by adjusting the stroke of the actuators, it is possible to move the ramp 6 into a lowered position by increasing the actuators' stroke, or into a raised position by decreasing the actuators' stroke. Preferably, other solutions may be employed to make the ramp 6 hinged to the platform 3 movable between a lowered and a raised position. Additionally, to load vehicles onto the tow truck that are unable to move by providing traction to their own wheels, e.g., when a car is broken down, severely damaged, or in a ditch, the tow truck includes a motorized winding device 8, e.g., a winch, preferably mounted on the platform 3 and preferably located near the cockpit 2 to minimize obstructions on the platform and not hinder the loading of a vehicle. For instance, a winch with a rope or chain and a hook can be provided, which can be attached to the vehicle to be rescued by unwinding the rope or chain from the winch so that when the winch is actuated, the rope or chain is wound up, generating a force that pulls the vehicle onto the tow truck. As shown in Fig.3-4, according to another aspect of the present invention, to increase the contribution provided by the vertical component of the traction force on a rope or chain 9 wound during use by the winch 8, a structural configuration of the ramp 6 is utilized. In particular, the ramp 6 has a through opening 10 transversely and preferably perpendicularly to the surface on which in use advances a vehicle to be loaded onto the platform. This opening 10 is also positioned at a height from the platform 3 greater than the plane of the platform, i.e., higher than the height of the winch 8 on the ramp when the ramp 6 is rotated into a raised position. Therefore, in this configuration, the rope or chain 9 extends upwards to reach the opening 10 and then passes through it extending downwards to reach the vehicle to be rescued. Preferably, devices configured to deflect the rope's path, e.g., rollers or pulleys, can be mounted inside the opening 10 so that the tow truck can be positioned transversely to the vehicle to be rescued, e.g., when the road does not allow positioning the tow truck parallel to the vehicle, and to reduce friction while the rope or chain is in use. When the rope or chain 9 is then connected to the vehicle to be rescued, the winch 8 is actuated, winding the rope or chain to pull the vehicle, e.g., out of a ditch. In this condition, as shown in Fig.5-6, the contribution of the vertical component is greater than the contribution of the same component if the rope or chain were wound longitudinally along the platform 3 (i.e., in Fig.5-6, the longer the arrow, the greater the contribution of the respective component into which the resisting force F of the load acting on the rope or chain is decomposed). Therefore, having the traction force with a vertical component that increases with the verticality of the ramp 6, by means of the rope or chain 9 it is possible to generate a greater force acting on the wheels of the vehicle to be rescued, increasing their adherence to the ground and thus reducing the risk of the wheels slipping or sliding downward while the vehicle is being pulled by the winch 8. Advantageously, since the ramp 6 is rigidly fixed to the remaining portion of the platform 3 during use, e.g., by tie rods 11 that keep the ramp locked vertically while the winch is in operation, it is possible to avoid having cantilevered components outside the chassis that reduce the load capacity and the overall stability of the tow truck, i.e., using a cantilevered element as a return for the rope or chain would cause an angular momentum that would increase the instability of the tow truck. Additionally, to minimize friction generated between the rope or chain and the surfaces of the opening 10, a pulley 12 can be mounted inside the opening to rotate about an axis transverse to the direction of the tow truck's movement. In this way, the pulley 12 is used so that when the winch 8 is in operation, the rope or chain 9 advances in contact with the pulley, causing it to rotate. Preferably, to provide greater support to the platform, particularly the cantilevered portion from the chassis, while a vehicle is being loaded onto it and to prevent the weight from damaging the platform or rear suspension, the tow truck can comprise a support device 13 hinged to an end zone of the chassis 1 opposite the cockpit 2 and underneath the platform 3. In particular, this support device 13 comprises a longitudinally extending body 14 cantilevered from the chassis 1 and a base 15, e.g., a fork comprising seats 17 configured to accommodate the tires of a vehicle that has been rescued and loaded onto the tow truck, rigidly connected to an end of the body longitudinally opposite to that connected to the chassis. Furthermore, this base 15 extends transversely and preferably perpendicularly to the body 14, for example, defining a structure with uprights and crosspieces at the ends, carrying a pair of actuators 16, preferably hydraulic, rigidly connected to the chassis 1 on one side and to the base 15 on the other. In this way, with the actuators 16 mounted at a distance from the point where the arm 14 is hinged to the chassis 1, actuating the actuators 16, e.g., by extending or retracting the pistons of the hydraulic actuators, causes the support device 13 to rotate respectively downward, i.e., approaching the road surface, or upward, i.e., approaching the platform 3. Therefore, based on this structural configuration, the support device 13 can be used to provide greater resistance to the platform 3, particularly by actuating the actuators to bring the base 15 into contact with the road surface. In this way, when the base 15 is in contact with the road surface and a vehicle is loaded onto the platform, the actuators on the support device can be used to generate a force on the platform opposite to and resistant to the force generated by the vehicle's weight, thereby reducing mechanical stress on the tow truck's rear suspension or platform, minimizing the risk of damage during use, and increasing safety for operators, i.e., the tow truck has greater stability. According to another aspect of the present invention, the support device 13 can also be used to provide greater stability and load capacity to the tow truck when the rope or chain 9 is in use to tow a vehicle and the ramp 6 is rotated upwards. In particular, the support device 13 can be brought and maintained in contact with the ground while the ramp 6 is rotated to a substantially vertical position to allow the rope or chain 9 from the winch 8 to pass through the opening 10 towards the vehicle to be towed. In this way, the load-resistant force, i.e., from the towed vehicle, acting on the rope or chain and generating an angular momentum that makes the tow truck more unstable, is countered by the presence of the support device 13, e.g., the fork resting on the ground, providing more stability to the tow truck and greater safety for operators while the tow truck is in operation. Preferably, the platform 3 can be provided separately from the transport vehicle, for example, it can be mounted on an existing transport vehicle from which the old platform is removed to install the platform 3 according to the present invention. Preferably, the transport vehicle T can be provided in a simplified configuration wherein the support device 13, e.g., the fork, is absent, or wherein such a support device is present but in a simplified constructional configuration capable of stabilizing when resting on the ground, i.e. in this constructional configuration, it is not possible to load the front wheels of a vehicle to be towed onto the support device while it remains lifted off the ground.

According to another aspect of the present invention, the platform 3 can be provided separately from the transport vehicle T, e.g., a platform configured according to the present invention and mountable on various models of a transport vehicle comprising the driving cockpit and chassis. In particular, to mount the platform 3 on board a transport vehicle T that does not have such a platform, a mounting method can be performed comprising the steps of:
- Providing a transport vehicle T;
- Providing a platform 3;
- Mounting the platform 3 on the transport vehicle T in such a way as to be both longitudinally mobile for translation with respect to the frame to be able to be translated at least partially by cantilevering out of the frame, and mobile for rotation with respect to an axis transverse to the direction of advancement of the transport vehicle T so as to be tiltable towards the road surface.

## Claims

1. Transport vehicle (T), preferably a tow truck, comprising a chassis (1), a cockpit (2) and a platform (3) on which at least one vehicle or motor vehicle can be loaded, such a cockpit and such a platform being connected to the chassis and arranged so that the platform extends longitudinally above the chassis from the cockpit (2) to one end of the chassis longitudinally opposite to such a cockpit, and the platform (3) being configured to be both longitudinally movable to translation with respect to the chassis so as to be translatable at least partially cantilevered out of the chassis, and rotationally movable with respect to an axis transverse to the advancement of the transport vehicle (T) so as to be tiltable towards the road surface; and
the platform (3) further comprising on board an actuated and extendable portion (7) from the longitudinally opposite end of said platform with respect to the cockpit (2), and a ramp (6) hinged to such an extendable portion.

2. Transport vehicle (T) according to claim 1, wherein the ramp (6) is rotationally movable around a first axis (R1) between a lowered position wherein the respective surfaces of said ramp and of the platform (3) on which a vehicle to be loaded moves define a first angle (A1), and a raised position wherein said respective surfaces define a second angle (A2) smaller than the first angle, the raised position being lockable by means of a releasable locking device (11).

3. Transport vehicle (T) according to claim 2, wherein when the locking device (11) is inserted, said device has a first end engaged to the platform (3) and a second end, longitudinally opposite to the first end, engaged to the ramp (6) defining a kinematic constraint for a second axis (R2) spaced apart and parallel to the first axis (R1) so that when the extendable portion (7) is actuated to reach an elongated configuration, the ramp (6) rotates in a raised position by lifting the second axis (R2) according to a curvilinear trajectory.

4. Transport vehicle according to any one of claims 2 or 3, wherein the ramp (6) comprises a pulley on which a rope or chain can be engaged which can be extended by a motorized winding device (8) arranged on board the platform (3) towards a vehicle to be towed which is in a position opposite to such a winding device with respect to the ramp (6).

5. Transport vehicle (T) according to any of claims 2 or 3, wherein the locking device (11) comprises a tie rod removably hinged on one side to the ramp (6) and on the other to the platform (3), and an actuator configured to move the extendable portion longitudinally.

6. Transport vehicle (T) according to any of the preceding claims, comprising a support device (13), preferably a fork comprising seats (17) wherein the tires of a vehicle can be housed, hinged to the chassis (1) which extends longitudinally in a cantilever manner from said chassis, and such a support device being movable between an upper end position under the platform (3) and a working position wherein it is extracted downwards having an end portion in contact with the road surface to stabilize the load when connected to the pulley.

7. Control method of the stability of a transport vehicle (T) according to claims 1 to 6, comprising the step of keeping the supporting device (13) rotated in contact with the road surface while the ramp (6) is blocked in a raised position with the rope or chain (9) engaged on the pulley to tow a vehicle.

8. Mounting method of a platform (3) on board a transport vehicle (T), preferably a tow truck comprising a chassis (1) and a cockpit (2), and the platform (3) being configured to carry at least one vehicle or motor vehicle and being connectable to the chassis of the transport vehicle (T) so as to extend longitudinally over the chassis from the cockpit (2) to an end of the chassis longitudinally opposite to said cockpit, and the platform (3) being configured to be both longitudinally movable to translation with respect to the chassis so as to be able to be translated at least cantilevered out of the chassis, and rotationally movable with respect to an axis transverse to the direction of advancement of the transport vehicle (T) so as to be tiltable towards the road surface and;
the platform (3) further comprising on board an actuated and extendable portion (7) from the longitudinally opposite end of said platform with respect to the cockpit (2), and a ramp (6) hinged to the extendable portion, and wherein such method comprises the steps of:
- Providing a transportation vehicle (T);
- Providing a platform (3);
- Mounting the platform (3) on the transport vehicle (T) in such a way as to be both longitudinally mobile for translation with respect to the frame to be able to be translated at least partially by cantilevering out of the frame, and mobile for rotation with respect to an axis transverse to the direction of advancement of the transport vehicle (T) so as to be tiltable towards the road surface.
